Europäisches Patentamt

(19) European Patent Office

Office européen des brevets

(11) Numéro de publication: **0 277 897**
**A1**

(12) # DEMANDE DE BREVET EUROPEEN

(21) Numéro de dépôt: **88450003.4**

(22) Date de dépôt: **26.01.88**

(51) Int. Cl.⁴: **A 23 N 15/08**
**A 23 N 15/04**

(30) Priorité: **02.02.87 FR 8701307**

(43) Date de publication de la demande:
**10.08.88 Bulletin 88/32**

(84) Etats contractants désignés: **ES IT NL**

(71) Demandeur: **SOCIETE GABRIELLE ET FILS S.A.**
**F-31380 Cadours (FR)**

(72) Inventeur: **Gabrielle, Dominique**
**F-31380 Cadours (FR)**

(74) Mandataire: **Ravina, Bernard**
**Cabinet Bernard RAVINA 24, boulevard Riquet**
**F-31000 Toulouse (FR)**

(54) **Machine pour le nettoyage et le calibrage de l'ail et autres plantes à bulbe.**

(57) La présente invention concerne une machine pour le nettoyage et le calibrage de l'ail et autres plantes à bulbe.

La machine selon l'invention pour le nettoyage et le calibrage de l'ail et autres plantes à bulbes se caractérise essentiellement en ce qu'elle comprend un poste d'alimentation (7) en plantes à partir duquel un ensemble (1) de transfert des plantes une à une reçoit les plantes une à une et les amène une à une successivement à un poste d'ébarbage (2) pour la réalisation d'au moins une opération d'ébarbage, à un poste d'équeutage (3) pour la réalisation d'une opération d'équeutage, à un poste de brossage (4) pour la réalisation d'au moins une opération de brossage et à un poste de pelage et calibrage (5). Selon une autre caractéristique de l'invention le poste d'ébarbage est constitué par un élément chauffant.

Fig 1

EP 0 277 897 A1

**Description**

## MACHINE POUR LE NETTOYAGE ET LE CALIBRAGE DE L'AIL ET AUTRES PLANTES A BULBE

La présente invention a pour objet une machine pour le nettoyage et le calibrage de l'ail et autres plantes à bulbes.

Les opérations de nettoyage des têtes d'ail consistent en des opérations d'ébarbage, d'équeutage, de brossage et de pelage. On a a déjà tenté par le passé de mécaniser les opérations de nettoyage et calibrage mais les résultats obtenus ont été jugé peu satisfaisants.

Pour cette raison, ces opérations sont encore réalisées manuellement, ce qui se révèle coûteux et ne permet pas un rendement élevé.

La présente invention a pour objet de pallier les inconvénients précédemment cités en mettant en oeuvre une machine permettant de mécaniser toutes les opérations de nettoyage et de calibrage. A cet effet, la machine selon la présente invention se caractérise essentiellement en ce qu'elle comprend en combinaison un poste d'alimentation en plante à paritr duquel un ensemble de transfert et préhension des plantes reçoit les plantes une à une et les amène une à une successivement à un poste d'ébarbage pour la réalisation d'au moins une opération d'ébarbage, à un poste d'équeutage pour la réalisation d'une opération d'équeutage, à un poste de brossage pour la réalisation d'au moins une opération de brossage et à un poste de pelage associé à un poste de calibrage.

Selon une autre caractéristique de l'invention, le dispositif d'ébarbage comporte un organe chauffant qui est amené à proximité ou en contact des barbes de chaque plante de façon à ce que ces dernières soient soumises à l'action de la chaleur dégagée par l'organe chauffant et soient calcinées.

D'autres avantages et caractéristiques de l'invention apparaîtront à la lecture de la description d'une forme préférentielle de réalisation, donnée à titre d'exemple non limitatif, en se referant aux dessins annexés en lesquels :

- la figure 1 est une vue de dessus d'une machine selon l'invention,

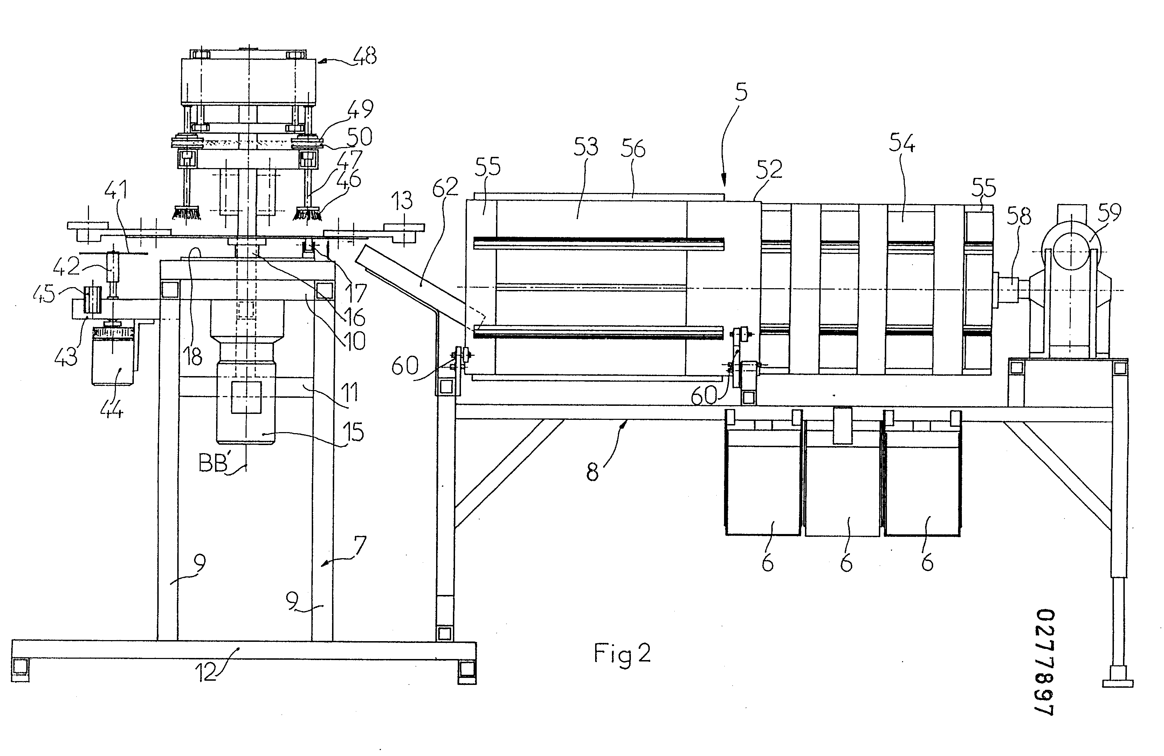

- la figure 2 est une vue de face de la machine selon l'invention,

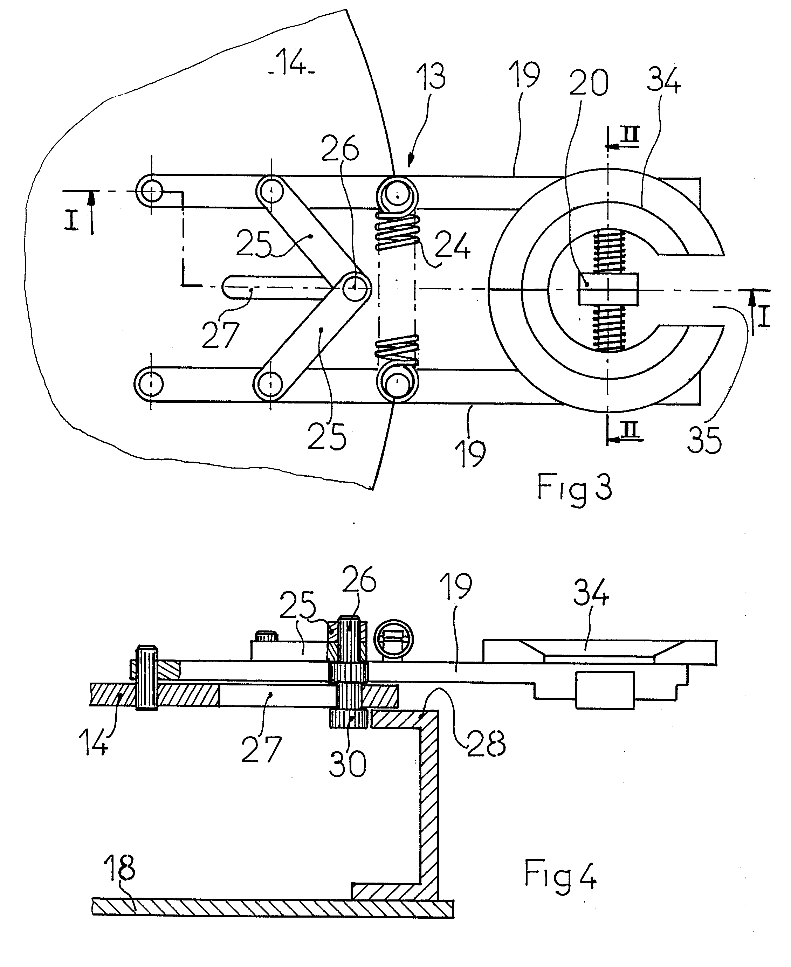

- la figure 3 est une vue de dessus d'un organe de préhension,
- la figure 4 est une vue en coupe selon la figure I/I de la figure 3,

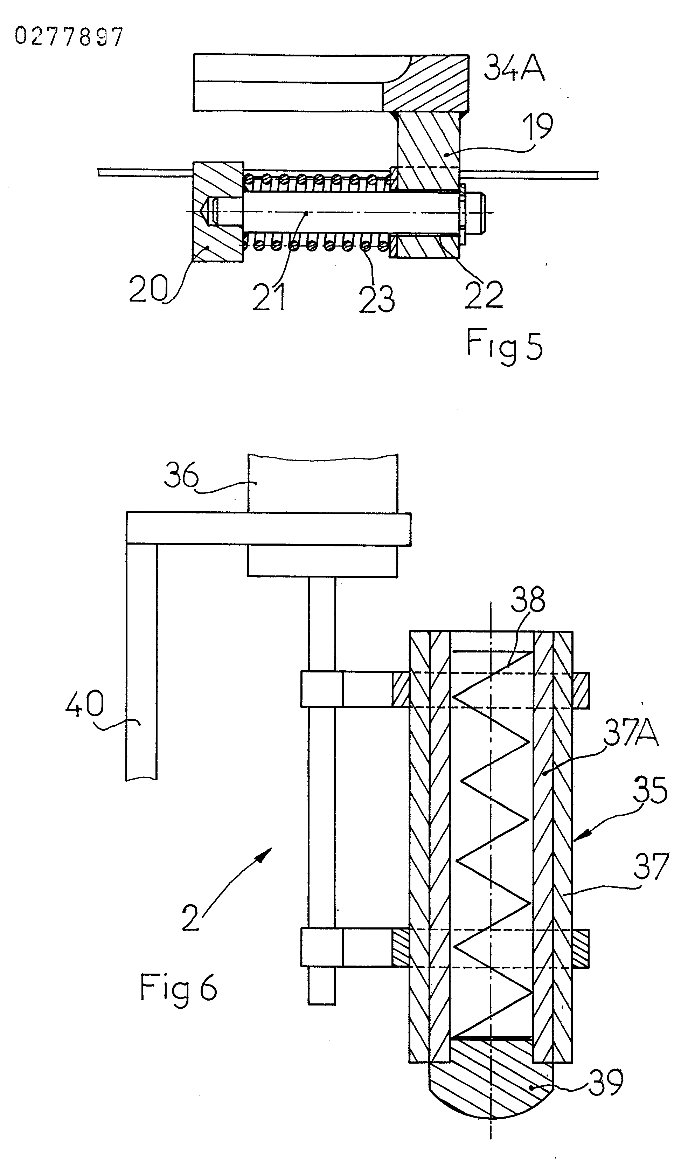

- la figure 5 est une demi-vue en coupe selon la ligne II/II de la figure 3,
- la figure 6 est une vue en coupe longitudinale du dispositif d'ébarbage,

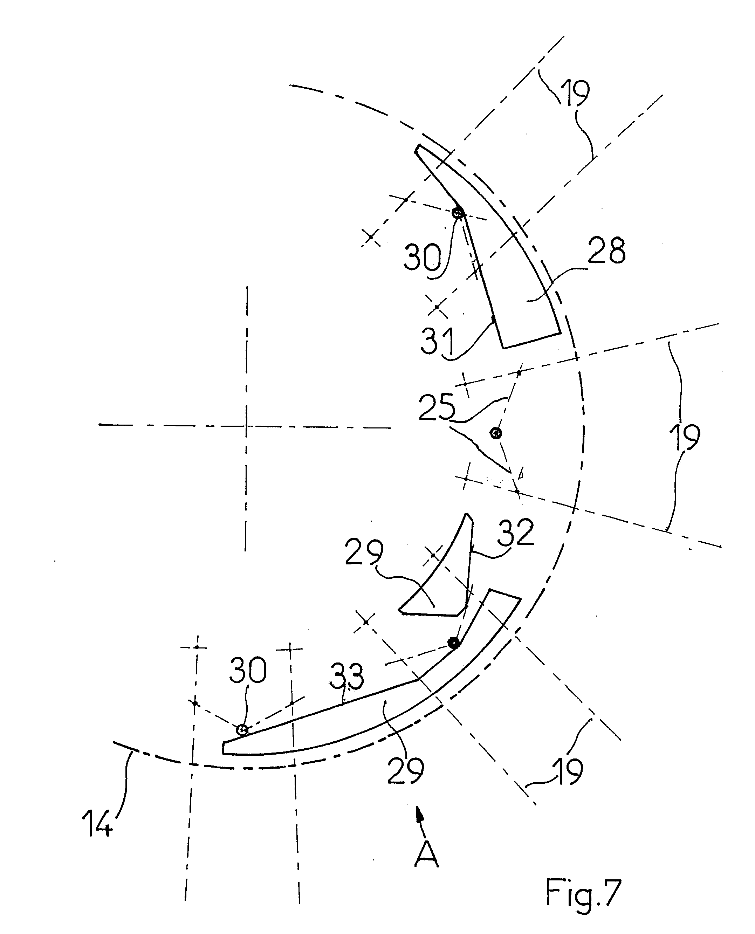

- la figure 7 est une vue de dessus des cames de commande de l'ouverture et fermeture des organes de préhension,

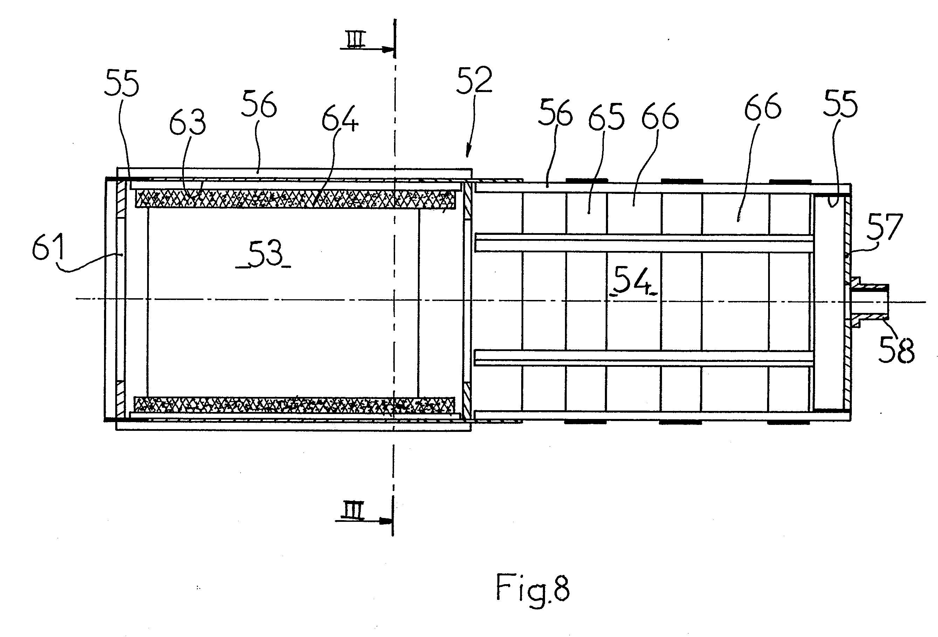

- la figure 8 est une vue en coupe longitudinale du poste de pelage et calibrage,

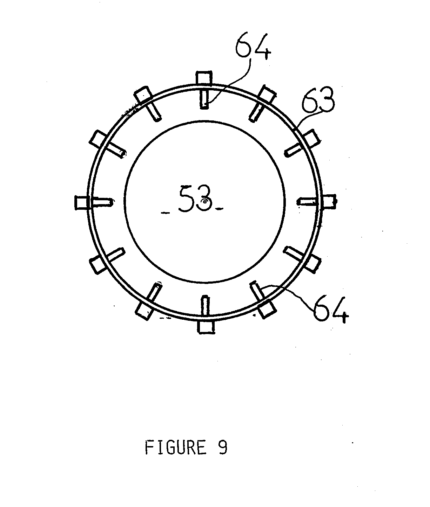

- la figure 9 est une vue en coupe transversale selon la ligne III/III de la figure 8.

Telle que représentée, la machine selon l'invention, pour mécaniser les opérations de nettoyage et de calibrage de l'ail ou autres plantes à bulbe est constituée par un poste d'alimentation A en plante, à partir duquel un ensemble 1 de transfert et préhension des plantes reçoit les plantes une à une et les amène successivement une à une, à poste d'ébarbage 2 pour la réali sation d'au moins une opération d'ébarbage, à un poste d'équeutage 3, pour la réalisation d'une opération d'équeutage, à un poste de brossage 4 pour la réalisation d'au moins une opération de brossage et à un poste 5 de pelage pour peler les plantes suivi d'un poste de calibrage 5A qui répartit les plantes vers différents réceptacles 6 en fonction de leur calibre.

Selon la forme préférentielle de réalisation, un bâti 7 commun supporte le dispositif de transfert et préhension, et le dispositifs d'ébarbage, d'équeutage et brossage. Toujours suivant cette forme de réalisation, essentiellement pour faciliter le montage, les organes du poste de calibrage et pelage sont montés sur un châssis indépendant 8.

Selon la forme préférée de réalisation, le dispositif de transfert 1 est agencé sous forme d'un carroussel et les différents postes 2 à 5 sont répartis autour du dispositif de transfert et préhension. Le bâti 7 est constitué par quatre montants verticaux 9 écartés les uns des autres et réunis les uns aux autres par des traverses horizontales supérieures 10 et médianes 11. Par leur extrémité inférieure, les montants verticaux sont fixés à un socle 12. Le dispositif de transfert et de préhension 1 est monté sur le bâti 7 tel que décrit.

Selon la forme préférée de réalisation, ce dispositif de transfert et de préhension comprend des organes de préhension 13 disposés suivant un même plan horizontal sur une structure support 14 de manière radiale par rapport à un axe vertical BB' autour duquel il est entrainé en rotation, pas à pas, par un organe moteur adapté 15. La structure support 14 est avantageusement constituée par un plateau circulaire horizontal fixé en extrémité supérieure d'une colonne verticale 16 en prise avec l'arbre de sortie de l'organe moteur 15. La structure support 14 est maintenue écartée de l'extrémité supérieure du bâti 7 et repose sur trois galets 17 régulièrement répartis autour de l'axe BB' vertical. De préférence, ces galets sont portés par une platine 18 du bâti 7. Cette platine et pourvue suivant l'axe BB' d'un orifice de passage de la colonne verticale 16. L'extrémité inférieure de cette colonne est accouplée à l'aide de tous moyens connus à l'arbre de sortie de l'organe moteur 15 qui est selon une forme préférentielle de réalisation monté entre les montents verticaux du bâti 7 et fixé aux traverses médianes 11 par tous moyens connus de l'homme de l'art.

Les organes de préhension 13 sont régulièrement répartis autour de l'axe BB' et l'écert angulaire entre deux organes de préhension consécutifs est égal à l'écart angulaire entre deux postes de travail consécutifs ou bien est un sous multiple de celui-ci.

L'organe moteur 15 est constitué de préférence par un moteur électrique et est agencé de façon à entrainer le dispositif de transfert et de préhension 1 en rotation suivant un arc de circonférence de valeur égale à l'écart angulaire entre deux organes de préhension 13. Il pourra être utilisé un moteur électrique du type pas à pas ou bien un moteur électrique conventionnel associé à un circuit d'automatismes commandant le fonctionnement pas à pas de ce moteur.

Selon la forme préférée de réalisation, chaque organe de préhension 13 est constitué par une pince qui est fermée dés qu'elle quitte le poste d'alimentation A en sorte que la plante qu'elle transporte soit fermement maintenue, et qui est ouverte dés qu'elle parvient au niveau du poste de pelage et calibrage en sorte que la plante transportée soit libérée et puisse s'introduire dans le poste de pelage 5 et par la suite dans le poste de calibrage 5A.

Cette pince comprend deux machoires 19 de serrage de la tige de la plante associées toutes deux à un mécanisme d'ouverture et de fermeture à positions d'ouvertures et fermetures stables, commandés par des cames. Chaque machoire est constituée par un bras articulé par une de ses extrémités suivant un axe vertical, au plateau support 14 et portant à son autre extrémité un tampon 20 de serrage de la queue de la plante. Le tampon de serrage est monté de manière élastique sur son bras.

Selon une forme de réalisation préférée, le tampon de serrage 20 est doté d'une tige 21 par laquelle il est monté en coulissement dans un alesage 22 du bras, pratiqué suivant l'épaisseur de ce dernier et suivant un axe horizontal. La tige porte à son extrémité un anneau élastique qui s'oppose à l'extraction de la tige. Un organe élastique 23 est interposé entre le bras et le tampon de façon à maintenir quasi-constante la force de serrage de la machoire 19 indépendamment de la grosseur de la tige de la plante. L'organe élastique 23 est par exemple un ressort à spire engagé sur le tige 21.

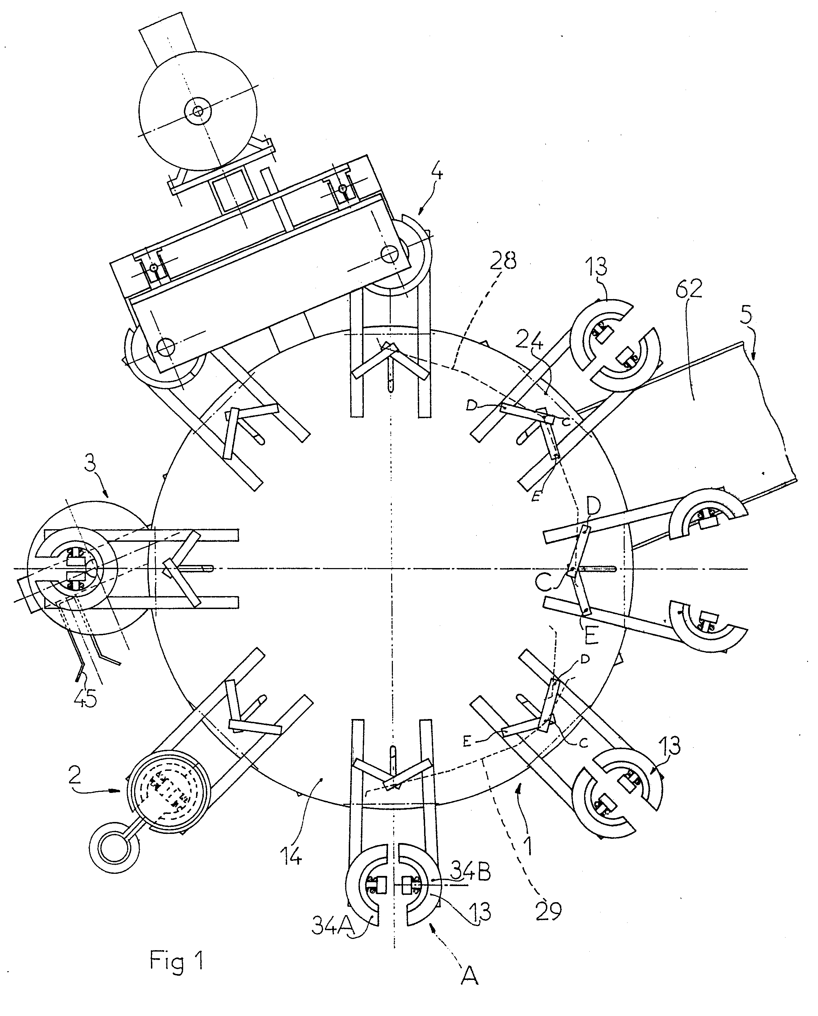

Le mécanisme de fermeture et ouverture est constitué par un ressort à spire 24 (schématisé en trait mixe fin en figure 1) tendu d'un bras à l'autre, par deux biellettes 25 articulées respectivement au bras d'une machoire et au bras de l'autre, et toutes deux à un coulisseau 26 monté en coulissement dans une lumière 27 oblonde pratiquée dans le plateau entre les deux machoires 19 suivant un axe radial.

Les points d'articulation des deux biellettes au coulisseau et aux bras définissent un triangle isocèle CDE de base et de hauteur déformables.

L'extrémité arrière de la lumière 27, c'est à dire celle la plus proche du centre du plateau, est disposée en arrière des points d'articulation des biellettes aux bras, de façon à ce que le sommet C du triangle CDE prédéfini, puisse être dirigé vers le centre du plateau 14 lorsque le coulisseau 26 vient buter contre la dite extrémité arrière (figure 1). L'extrémité avant de la lumière est disposée en avant des points d'articulation précités.

La position arrière du coulisseau correspond à la position d'ouverture des pinces. Suivant cette position, l'angle entre les deux biellettes 25, est suffisamment important (de l'ordre de 140°) pour maintenir un écart angulaire suffisant entre les machoires.

Grâce à l'action du ressort à spires 24, tendu entre les deux bras, le coulisseau 26 est maintenu appliqué contre l'extrémité arrière de la lumière 27. Cette position stable d'ouverture sera maintenue tant qu'une action extérieure ne sera pas exercée sur le coulisseau en vue de le déplacer dans sa lumière 27 vers l'extrémité avant de cette dernière.

Dés que le sommet C du triangle CDE se trouve dirigé vers la périphérie du plateau, le mouvement de fermeture des pinces peut se poursuivre uniquement sous l'action de rappel exercée par le ressort à spires 24. La position stable de fermeture est atteinte lorsque le coulisseau 26 bute contre l'extrémité avant de la lumière 27.

Pour déplacer le coulisseau 26, soit vers l'arrière de la lumière 27, soit vers l'avant, il est prévu deux cames fixes 28 et 29 disposées toutes deux, sous le plateau support 14. Les cames interceptent la trajectoire d'un pion 30 saillant fixé au coulisseau 26, de façon à repousser le dit coulisseau, soit vers l'avant, soit vers l'arrière.

La première came 28 est disposée en amont et au niveau du poste de pelage et présente une rampe 31 contre laquelle vient frotter le pion saillant 30. Cette rampe 31 est conformée de façon à repousser progressivement le pion 30 saillant et ouvrir progressivement la pince.

Cette pince se trouvera complètement ouverte au niveau du poste de pelage 5 et la plante portée par la dite pince pourra s'introduire par gravité dans le poste de pelage 5.

La seconde came 29 s'étend de la zone amont à la zone aval du poste d'alimentation A et a pour rôle d'assurer une fermeture progressive des pinces. Ces dernières au niveau du poste d'alimentation sont mi-ouvertes. De préférence, cette seconde came 29 présente une première rampe 32 disposée sur le trajet du pion du coulisseau pour repousser ce dernier dans le sens qui correspond à la fermeture des pinces et une seconde rampe 33 disposée toujours sur le trajet du pion 30 contre laquelle vient buter le dit pion 30 du coulisseau, sous l'effet de l'action du ressort à spires 24 dés que le sommet C du triangle prédéfini est dirigé vers la périphérie du plateau. Cette seconde rampe 33 est conformée de façon à amener progressivement le coulisseau vers l'avant de la lumière, ce qui permet d'assurer une fermeture et un serrage progressif des machoires de la pince.

De préférence, à chaque pince est associée une coupelle 34 évasée vers le haut montée au-dessus des tampons de serrage 20 destinée à recevoir le bulbe de la plante. Cette coupelle 34 en forme d'anneau est dotée d'une fente 35 radiale pour faciliter l'introduction de la tige des plantes entre les tampons presseurs 20.

Selon la forme préférée de réalisation, la coupelle est constituée de deux demi-coupelles 34A et 34B en forme de demi-anneau fixées chacune à un bras de la machoire.

Ces deux demi-coquilles sont jointives suivant l'axe de symétrie de la pince et laissent apparaitre la fente avant. On comprend que les plantes soit disposées sur les coupelles de façon à ce que la barbe soit dirigée vers le haut.

En aval du poste d'alimentation est disposé le poste d'ébarbage 2. Conformément à l'invention, ce poste d'ébarbage comprend notamment un organe chauffant 35 porté au-dessus de l'organe de transfert et préhension 1 par un vérin 36 qui l'amène suivant un mouvement vertical en contact avec la barbe des plantes ou à proximité de ces dernières pour calciner les dites barbes et qui l'écarte de la plante pour permettre le défilement du dispositif de transfert 1 et le positionnement d'une nouvelle plante.

Selon la forme préférée de réalisation, le vérin 36 est vertical et l'organe chauffant 35 est porté par la tige de ce dernier. Entre le tige et le corps de l'organe chauffant peut être interposé une barrière thermique connue en soi.

A titre d'exemple, l'organe chauffant peut être constitué par un corps tubulaire 37 en matière réfractaire ou comportant une barrière thermique interne 37A, dans lequel est disposée une résistance électrique 38 chauffante qui chauffe une pastille métallique 39 fixée en extrémité du corps destinée à être amenée en contact ou à proximité des barbes des plantes.

A titre d'exemple la température de cette pastille est comprise entre 600 et 1000°C pour une surface comprise entre 3 et 4 cm2. Cette pastille, en regard du dispositif de transfert pourra pré senter une surface convexe de façon à mieux épouser la surface concave du bulbe. Il est intéressant de noter que la chaleur dégagée par la pastille permet également d'obtenir une une dessication des peaux extérieures de la plante, ce qui pourra faciliter ultérieurement leur enlèvement par brossage ou pelage.

Le vérin 36 est de préférence un vérin pneumatique. Ce vérin est fixé par son corps à une structure support 40 fixée au bâti 7.

En aval du poste d'ébardage est disposé un poste d'équeutage 3. Ce poste d'équeutage est constitué notamment par un organe de coupe 41 disposé sous le plateau sur la trajectoire des tiges ou queues de plantes.

Selon la forme préférentielle de réalisation, l'organe de coupe est un disque de coupe horizontal porté par l'extrémité supérieure d'une broche 42 verticale monté dans un palier porté par un bras 43 horizontal fixé au châssis 7. L'extrémité inférieure de cette broche est en prise avec l'arbre de sortie d'un organe moteur 44 qui est fixé au bras 4 ou bien reçoit une poulie entrainée par une courroie en prise avec une poulie menante calée sur l'arbre de sortie d'un organe moteur.

Avantegeusement, ce poste sous le dispositif de transfert et sous l'organe de coupe, est équipé d'un guide en U 45 placé sur la trajectoire des tiges des plantes de façon à ce que les tiges puissent s'introduire entre les ailes du U et soient guidées vers l'organe de coupe 41. De plus, le guide 45 et le disque de coupe 41 sont disposés l'un par rapport à l'autre de façon à ce que le dit guide soit dirigé suivant une corde du disque circulaire. De cette façon, les efforts de coupe repousseront la tige de la plante contre une des ailes de U, ce qui assurera le calage de la dite tige lors de sa coupe.

En aval du poste d'équeutage tel que décrit est disposé le poste de brossage 4. Ce poste de brossage comprend au moins une brosse rotative 46 disposée sur le trajet des plantes.

Selon une première forme de réalisation, ce poste comprend deux brosses disposées sur le trajet des plantes, une des deux brosses étant disposée en aval de l'autre.

Ces deux brosses sont montées au-dessus du dispositif de transfert et préhension 1 et viennent brosser les bulbes des plantes. Ces brosses 46 permettent de chasser les résidus de calcination des barbes et éventuellement, de réaliser un pré-pelage des bulbes.

Selon cette forme de réalisation, les deux brosses 46 sont décalées angulairement l'une par rapport à l'autre d'une valeur correspondant à l'écart angulaire entre deux pinces consécutives. Les deux brosses sont calées en extrémité inférieure d'une broche verticale 47 montée dans un palier porté par une structure support 48 fixée au bâti 7. Une poulie 49 est calée sur chacune des broches et les deux poulies 49 coopèrent toutes deux avec une même courroie 50. Une des deux broches 46 est une prise avec un organe moteur connu en soi.

Selon une forme préférée de réalisation, le dispositif d'ébarbage n'est plus disposé en amont du poste d'équeutage mais entre ce dernier et le poste de brossage. Ce dispositif d'ébarbage peut être porté de manière fixe par la structure du poste be brossage en amont de la ou des brosses et est maintenu à une distance fixe du dispositif de préhension au-dessus du trajet des plantes. Selon cette forme de réalisation, le dispositif de brossage n'est équipé que d'une seule brosse.

En aval du poste de brossage sont disposés le poste de pelage 5 et le poste de calibrage 5A. Selon une forme de réalisation, ces postes sont ménagés dans un seul et même tambour horizontal 52 rotatif autour de son axe, comportant deux compartiments 53 et 54 alignés, de forme cylindrique. Le compartiment 53 est situé immédiatement en aval du poste de brossage 4 et est destiné au pelage tandis que l'autre compartiment 54 est destiné au calibrage. Il est bien évident que chacun des deux compartiments pourront être simultanément peleur et calibreur.

Le tambour 52 est constitué de deux cerclages 55 d'extrémité et un cerclage médain 55A, réunis les uns aux autres par des longerons 56. Les cerclages sont coaxiaux et les longerons 56 sont disposés suivant les génératrices d'un cylindre à écartement les uns des autres.

Selon cette forme de réalisation, le cerclage médian est commun au poste de pelage et au poste de calibrage et suivant cette forme de réalisation, il n'est prévu qu'une seule série de longerons. Chacun de ces longerons sont fixés aux trois cerclages.

Selon une autre forme de réalisation, sont prévues deux séries de longerons. La première série est fixée sur la périphérie externe du cerclage amont et cerclage médian et la seconde est fixée à la périphérie interne du cerclage médian et au cerclage aval.

L'extrémité aval du tambour 52 est fermée par un flasque circulaire 57 pourvu, suivant l'axe du tambour, d'un arbre 58 qui est en prise avec un organe moteur 59 monté sur le châssis 8 du poste de calibrage et pelage. Par le cerclage d'extrémité amont et par le cerclage médian, le tambour 52 repose sur deux paires de galets 60. Chaque paire de galets est agencée en palonnier, lequel est articulé au bâti du poste 5.

L'extrémité amont du tambour est pourvue d'une large ouverture 61 constituant l'ouverture d'introduction des plantes. De préférence, le tambour est disposé à un niveau inférieur par rapport au dispositif 1 de façon à ce que les plantes puissent s'introduire par gravité dans le compartiment de pelage 53.

Pour faciliter l'introduction des plantes, il est prévu une goulotte 62 inclinée fixée au chassis du poste 5 dont l'extrémité inférieure pénètre dans le tambour par passage au travers de l'ouverture 61 et dont l'extrémité supérieure est située sous le dispositif de transfert et préhension 1 en aval du poste de brossage 4.

Le premier compartiment 53 du tambour 52 est doté d'un habillage 63 interne cylindrique et d'une série de bandes brossantes 64. Ces bandes brossantes sont constituées en toute matière adaptée. Ces bandes brossantes se présentent généralement sous forme de rectangle et sont fixées par un de leurs bords longitudinaux à l'habillage 63 du premier compartiment 53 du rouleau 52 et s'étendent chacune suivant un plan radial au dit rouleau sur toute la longueur du premier compartiment 53.

Dans ce premier compartiment, les plantes sont agitées par les différentes bandes brossantes 64 et perdent peu à peu leur peau externe. Sous l'effet de cette agitation, les plantes parviennent au second compartiment calibreur 54. L'habillage de ce compartiment est constitué par plusieurs cerclages 65 séparés les uns des autres par des intervalles 66. Ces cerclages sont montés sur les longerons 56 avec possibilité de coulissement de façon à ajuster la valeur de chaque intervalle 66, ce qui détermine le calibre des plantes. Sous le second compartiment 53 au droit de chaque intervalle est dispoé un des récipients 6 de réception des plantes calibrées.

On a précédemment décrit un poste peleur et un poste calibreur ménagés tous deux dans un seul et même tambour rotatif. Il est bien évident qu'il pourra être prévu deux tambours dont un est peleur et l'autre calibreur.

Ces deux tambours pourront être disposés l'un à la suite de l'autre de manière coaxiale ou bien oblique. De plus, chaque tambour pourra être monté en rotation sur sa propre structure et pourra être entraîné en rotation par son propre organe moteur, suivant une vitesse de rotation, égale ou différente de celle de l'autre tambour.

La machine selon la présente invention reçoit tous les automatismes nécessaires à assurer son fonctionnement de manière séquencée et tous les organes de sécurité nécessaires.

Il est intéressant de noter que la machine selon l'invention peut ne pas être équipée de la totalité des postes de travail précédemment énoncés. C'est ainsi que la machine ne pourra être équipée que du poste d'ébarbage ou bien que du poste d'équetage ou bien que du poste de brossage ou bien que du poste de pelage et calibrage.

Il est également évident que sans être équipée de la totalité des postes de travail précédemment énoncés la machine pourra en recevoir plusieurs.

Ainsi cet aspect modulaire permet l'adaptation de cette dernière aux réels besoins de l'utilisateur.

Il est bien évident que la présente invention peut recevoir tous aménagements et toutes variantes sans pour autant sortir du domaine du présent brevet.

## Revendications

1. Machine pour le nettoyage et le calibrage de l'ail et autres plantes à bulbe caractérisée en ce qu'elle comprend un poste d'alimentation (A) en plante à partir duquel un ensemble (1) de transfert des plantes une à une reçoit les plantes une à une et les amène une à une successivement à un poste d'équeutage (3) pour la réalisation d'une opération d'équeutage, à un poste d'ébarbage (2) pour la réalisation d'au moins une opération d'ébarbage, à un poste de brossage (4) pour la réalisation d'au moins une opération de brossage et à un poste de pelage (5) suivi d'un poste de calibrage (5A).

2. Machine selon la revendication 1 caractérisée en ce que le dispositif de préhension et transfert (1) est constitué par des organes de préhension (13) disposés suivant un même plan horizontal sur une même structure support, de manière radiale par rapport à un axe (BB') autour duquel le dispositif (1) est entrainé en rotation pas à pas par un organe moteur (15).

3. Machine selon la revendication 2 caractérisée en ce que chaque organe de préhension (13) ou pince comprend : deux mâchoires (19) constituées chacune par un bras articulé par une de ses extrémités au plateau support (12) et portant à son autre extrémité un tampon de serrage (20) de la queue de la plante et comprend un mécanisme à ouverture et fermeture commandées, constitué par un organe élastique (24) tendu entre les deux bras de la pince et par deux biellettes (25) articulées respectivement au bras d'une des mâchoires et au bras de l'autre et toutes deux à un même coulisseau (26) monté en coulissement dans une lumière (27) oblonde pratiquée dans le plateau (12) entre les mâchoires (19) suivant un axe radial, l'extrémité arrière de la lumière étant située en arrière des points d'articulation des biellettes au coulisseau tandis que l'extrémité avant est située en avant de ces derniers.

4. Machine selon la revendication 3 caractérisée en ce que le coulisseau comporte un pion de manoeuvre (30) faisant saillie vers le bas.

5. Machine selon les revendications 1 et 4 caractérisée par deux cames fixes (28), (29) disposées sous le plateau (12) sur le trajet des pions (30) de manoeuvre de chaque coulisseau (26) afin de repousser ce dernier, soit vers l'arrière, soit vers l'avant de la lumière (27), soit vers l'arrière pour ouvrir ou fermer les pinces.

6. Machine selon la revendication 3 caractérisée en ce que chaque tampon de serrage (20) est monté de manière élastique sur son bras.

7. Machine selon la revendication 5 caractérisée en ce que la première came (28) est disposée en partie en amont du poste de pelage et calibrage dotée d'une rampe (31) interceptant le trajet du pion de chaque coulisseau (26) de façon à amener progressivement ce dernier en extrémité arrière de la lumière (27) et à ouvrir progressivement la pince jusqu'à que cette dernière attaque une position d'ouverture stable.

8. Machine selon la revendication 5 caractérisée en ce que la second came (29) s'étend de la zone aval à la zone amont du poste d'alimentation et présente une première rampe (32) disposée sur le trajet du pion (30) du coulisseau pour repousser ce dernier dans le sens qui correspond à la fermeture des pinces et une second rampe (33) disposée toujours sur le trajet du pion (30) contre laquelle le dit pion vient buter sous l'effet de l'action du ressort (24), lorsque les points d'articulation des biellettes au coulisseau sont en avant des points d'articulation des biellettes au bras, la dite rampe amenant progressivement le coulisseau vers l'extrémité avant de la rampe pour réaliser la fermeture progressive des pinces.

9. Machine selon la revendication 2 caractérisée par une coupelle évasée vers le haut en forme d'anneau, fendue radialement, montée solidaire de chaque pince au-dessus des tampons de serrage et destinée à recevoir le bulbe de chaque plante.

10. Machine selon la revendication 1 caractérisée en ce que le poste d'ébarbage (2) comprend un organe chauffant qui est disposée à proximité ou amené en contact des barbes de chaque plante de façon à ce que ces dernières soient soumises à l'action de la chaleur dégagée par l'organe chauffant et soient calcinées.

11. Machine selon la revendication 1 caractérisée en ce que le poste de pelage (5) et le poste de calibrage (5A) sont constitués par un même tambour (52) doté d'un premier compartiment ou compartiment de pelage (53) et un compartiment de calibrage (54) à la suite du précédent et aligné avec ce dernier.

12. Machine selon la revendication 10 caractérisée en ce que le compartiment de pelage (53) comprend des bandes brossantes disposées chacune suivant un plan radial du compartiment (53).

13. Machine selon la revendication 1 caractérisée en ce que le poste de brossage (4) comprend au moins une brosse rotative (46) disposée sur le trajet des bulbes des plantes.

14. Machine selon la revendication 10 caractérisée en ce que l'organe chauffant comprend un corps tubulaire (37) dans lequel est disposé une résistance électrique chauffante (38) que chauffe une pastille métallique (39) fixée en extrémité du corps (37).

15. Machine selon la revendication 11 caractérisée en ce que le poste de calibrage (5A) est constitué par des longerons (56) disposés suivant les génératrices d'un cylindre à espacement les uns des autres, fixés à un cerclage (55) et à un cerclage (55A) et par des cerclages (65) séparés les uns des autres par des intervalles (66), les dits cerclages (65) étant montés sur les longerons avec possibilité de coulissement de façon à ajuster la valeur de chaque intervalle (66), ce qui détermine le calibre des plantes.

0277897

Fig 1

Fig 2

0277897

0277897

Fig 3

Fig 4

0277897

Fig 5

Fig 6

0277897

Fig.7

Fig.8

0277897

FIGURE 9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 406 964  (P. COGEZ et al.)<br>* Page 1, ligne 11 - page 2, ligne 18; figures 1,2 *<br>--- | 1-2,9 | A 23 N  15/08<br>A 23 N  15/04 |
| A | FR-A-2 584 911  (B. TREPOUT)<br>--- | | |
| A | FR-A-2 531 615  (G. MAYBON)<br>--- | | |
| A | GB-A-1 170 876  (TRIPAX COMPANY PROPRIETARY LTD)<br>--- | | |
| A | US-A-3 298 412  (L.R. SMIDA)<br>--- | | |
| A | PATENT ABSTRACTS OF JAPAN, vol. 4, no. 119 (C-22)[601], 23 août 1980; & JP-A-55 74 780 (TAIWA NOUKI K.K.) 05-06-1980<br>* En entier *<br>----- | | |

DOMAINES TECHNIQUES
RECHERCHES (Int. Cl.4)

A 23 N

Le présent rapport a été établi pour toutes les revendications

| Lieu de la recherche | Date d'achèvement de la recherche | Examinateur |
|---|---|---|
| LA HAYE | 10-03-1988 | NEHRDICH H.J |

EPO FORM 1503 03.82 (P0402)